# EUROPEAN PATENT SPECIFICATION

(11) **EP 4 317 289 B1**
(45) Date of publication and mention of the grant of the patent: **23.04.2025**
(21) Application number: 22780804.5
(22) Date of filing: 28.03.2022
(51) Int. Cl.: C08K 5/521, C08K 7/10, C08L 25/06, C08L 53/02, C08L 71/12, C08K 3/22, C08K 3/34

(54) **POLYPHENYLENE ETHER RESIN COMPOSITION AND MOLDED ARTICLE**
POLY(PHENYLENETHER)HARZZUSAMMENSETZUNG UND FORMARTIKEL
COMPOSITION DE RÉSINE DE POLY(ÉTHER DE PHÉNYLÈNE) ET ARTICLE MOULÉ

(30) Priority: 29.03.2021 JP 2021055524
(43) Date of publication of application: 07.02.2024
(73) Proprietor: Asahi Kasei Kabushiki Kaisha, Tokyo 1000006 (JP)
(72) Inventor: TAKOSHIMA, Naoki, Tokyo 100-0006 (JP); YAMAMOTO, Mihoko, Tokyo 100-0006 (JP); IMAI, Makoto, Tokyo 100-0006 (JP)
(74) Representative: Strehl & Partner mbB
(86) International application number: PCT/JP2022/015165
(87) International publication number: WO 2022/210593

(56) References cited:
- CN-A- 108 148 393
- JP-A- 2005 097 477
- JP-A- 2018 090 656
- JP-A- S5 883 053
- US-A- 5 389 714
- US-B2- 9 991 622

## Description

### TECHNICAL FIELD

The present disclosure relates to a polyphenylene ether resin composition and a molded article.

### BACKGROUND

In the field of electrical and electronic appliances, excellent tracking resistance, which is one of the electrical characteristics, is essential to ensure safety against ignition caused by electrical loads. In recent years, components for electrical and electronic appliances and electrical components have been rapidly becoming smaller and denser. As a result, the insulation distance has become smaller, and the requirements for tracking resistance and other characteristics of such components (molded articles) have become increasingly stringent (see PTL 1).

In addition, rigidity is increasingly required for enclosures of components for electrical and electronic appliances and electrical components (see PTL 2).

As a response to the demand for tracking resistance performance, for example, techniques are well-known in which tracking resistance performance is improved by adding titanium oxide to thermoplastic resins (see PTLs 3 and 4).

### CITATION LIST

### Patent Literature

PTL 1: JP 2016-183294 A
PTL 2: JP 2001-316587 A
PTL 3: JP 5405738 B
PTL 4: WO 2015/002145 A1

### SUMMARY

### (Technical Problem)

In the thermoplastic resin compositions disclosed in the conventional art as listed above, however, further challenges remain in achieving both high tracking resistance and rigidity.

In light of the above problem, it is an object of the present disclosure to provide a resin composition that is excellent in tracking resistance performance and that can be used to produce a molded article provided with rigidity.

### (Solution to Problem)

As a result of diligent study to solve the aforementioned problem, the present inventors have conceived of the present disclosure.

Specifically, the present disclosure is as follows.
[1] A polyphenylene ether resin composition comprising:
   (a) a resin component;
   (b) titanium oxide; and
   (c) an inorganic filler,

   wherein the (c) inorganic filler has a thermal conductivity of 2 to 12 [W/(m·K)],
   the (a) resin component comprises 50 to 90 parts by mass of (a1) a polyphenylene ether in 100 parts by mass of the (a) resin component,
   an amount of the (b) titanium oxide is 5 to 40 parts by mass relative to 100 parts by mass of the (a) resin component,
   an amount of the (c) inorganic filler is 5 to 50 parts by mass relative to 100 parts by mass of the (a) resin component, and
   a mass ratio of the (b) titanium oxide to the (c) inorganic filler ((b) / (c)) is 0.2 to 8.0.
[2] The polyphenylene ether resin composition according to [1], wherein the (c) inorganic filler is one or more selected from the group consisting of (c-1) a calcium silicate-based fibrous material and (c-2) talc.
[3] The polyphenylene ether resin composition according to [2], wherein the (c) inorganic filler is the (c-1) calcium silicate-based fibrous material.
[4] The polyphenylene ether resin composition according to [2], wherein the (c-1) calcium silicate-based fibrous material is wollastonite.
[5] The polyphenylene ether resin composition according to any one of [1] to [4], wherein a total content of the (b) titanium oxide and the (c) inorganic filler is 15 to 90 parts by mass relative to 100 parts by mass of the (a) resin component.
[6] The polyphenylene ether resin composition according to any one of [1] to [5], wherein the (a) resin component contains 1 to 49 parts by mass of (a2) a polystyrene-based resin in 100 parts by mass of the (a) resin component.
[7] The polyphenylene ether resin composition according to any one of [1] to [6], wherein the (a) resin component contains 1 to 49 parts by mass of (a3) a hydrogenated block copolymer in 100 parts by mass of the (a) resin component.
[8] The polyphenylene ether resin composition according to any one of [1] to [7], comprising 5 to 30 parts by mass of (d) a phosphate ester-based flame retardant relative to 100 parts by mass of the (a) resin component.
[9] The polyphenylene ether resin composition according to [8], wherein the (d) phosphate ester-based flame retardant is a condensation product of a phosphate ester.
[10] A molded article comprising the polyphenylene ether resin composition according to any one of [1] to [9].

### (Advantageous Effect)

According to the present disclosure, it is possible to provide a resin composition that is excellent in tracking resistance performance and that can be used to produce a molded article provided with rigidity.

### DETAILED DESCRIPTION

The following provides a detailed description of an embodiment of the present disclosure (hereinafter, also referred to as the "present embodiment"). However, the present disclosure is not limited to the following embodiment and may be implemented with various alterations that are within the essential scope thereof.

In the present embodiment, (a) a resin component, (b) titanium oxide, (c) an inorganic filler, (d) a phosphate ester-based flame retardant, (a1) a polyphenylene ether, (a2) a polystyrene-based resin, (a3) a hydrogenated block copolymer, (c-1) a calcium silicate-based fibrous material, and (c-2) talc may be simply referred to as (a) component, (b) component, (c) component, (d) component, (a1) component, (a2) component, (a3) component, (c-1) component, and (c-2) component, respectively.

In the present embodiment, numerical ranges are intended to include the lower and upper limits of the range, unless otherwise stated. For example, 50 to 90 parts by mass means 50 parts by mass or more and 90 parts by mass or less.

### [Polyphenylene ether resin composition]

A polyphenylene ether resin composition of the present embodiment (hereinafter simply referred to as "resin composition of the present embodiment") contains:
(a) a resin component;
(b) titanium oxide; and
(c) an inorganic filler,

wherein the (c) inorganic filler has a thermal conductivity of 2 to 12 [W/(m.K)],
the (a) resin component contains 50 to 90 parts by mass of (a1) a polyphenylene ether in 100 parts by mass of the (a) resin component,
the amount of the (b) titanium oxide is 5 to 40 parts by mass relative to 100 parts by mass of the (a) resin component,
the amount of the (c) inorganic filler is 5 to 50 parts by mass relative to 100 parts by mass of the (a) resin component, and
the mass ratio of the (b) titanium oxide to the (c) inorganic filler ((b) / (c)) is 0.2 to 8.0. This configuration enables the production of molded articles with excellent tracking resistance performance and provided with rigidity.

Hereinafter, the components constituting the resin composition of the present embodiment will be described and exemplified.

### [(a) Resin component]

The (a) resin component in the resin composition of the present embodiment contains at least (a1) a polyphenylene ether. The (a) resin component other than the (a1) polyphenylene ether include (a2) a polystyrene-based resin and (a3) a hydrogenated block copolymer.

### [(a1) Polyphenylene ether]

Examples of the (a1) polyphenylene ether include poly(2,6-dimethyl-1,4-phenylene ether), poly(2-methyl-6-ethyl-1,4-phenylene ether), poly(2-methyl-6-phenyl-1,4-phenylene ether), and poly(2,6-dichloro-1,4-phenylene ether), for example. In addition, copolymers of 2,6-dimethylphenol and other phenols are also examples of the (a1) polyphenylene ether, for example. Examples of such copolymers include, for example, copolymers of 2,6-dimethylphenol and 2,3,6-trimethylphenol; and copolymers of 2,6-dimethylphenol and 2-methyl-6-butylphenol. Among these, particularly preferred polyphenylene ethers are poly(2,6-dimethyl-1,4-phenylene ether), copolymers of 2,6-dimethylphenol and 2,3,6-trimethylphenol, or a mixture of these.

Dibutylamine may be included in some end groups in polyphenylene ether. The presence of dibutylamine in a part of end groups of the polyphenylene ether can be confirmed by the peak appearing at 3.620 ppm in NMR.

The (a1) polyphenylene ether can be produced by known methods. Examples of the production method of the (a1) polyphenylene ether include production methods described in US 3306874 B, US 3306875 B, US 3257357 B, US 3257358 B, JP S50-51197 A, JP S52-17880 B, and JP S63-152628 B, for example.

The preferred range of reduced viscosity of the (a1) polyphenylene ether (measured with 0.5 g/dL chloroform solution, at 30 °C, with an Ubbelohde-type viscometer) is 0.30 dL/g to 0.80 dL/g, more preferably 0.35 dL/g to 0.75 dL/g, and most preferably 0.38 dL/g to 0.55 dL/g.

As the (a1) polyphenylene ether, one type may be used alone or two or more types with different compositions, molecular weights, reduced viscosities, or the like may be used in combination.

Well-known stabilizers can also may preferably used to stabilize the polyphenylene ether. Examples of the stabilizers include metal-based stabilizers such as zinc oxide and zinc sulfide; organic stabilizers such as hindered phenol-based stabilizers, phosphorus-based stabilizers, and hindered amine-based stabilizers. The preferred content of the stabilizer is less than 5 parts by mass per 100 parts by mass of the (a1) polyphenylene ether.

Furthermore, a well-known additive or the like that can be added to polyphenylene ethers may also be added in an amount of less than 10 parts by mass per 100 parts by mass of the (a1) polyphenylene ether.

The content of the (a1) polyphenylene ether is 50 to 90 parts by mass, preferably 50 to 80 parts by mass in 100 parts by mass of the resin component from the viewpoint of achieving a sufficiently good balance of tracking resistance performance and rigidity.

### [(a-2) Polystyrene-based resin]

As the (a) resin component, (a2) a polystyrene-based resin may be used.

Examples of the (a2) polystyrene-based resin include homopolymers of styrene-based compounds and copolymers of styrene-based compounds and other monomers, for example.

One type of the (a2) polystyrene-based resin may be used alone, or two or more types of polystyrene-based resins may be used in combination.

In one embodiment, when the (a2) polystyrene-based resin is a copolymer of a styrene-based compound and another monomer, the amount of the constituent unit derived from the styrene-based compound in the copolymer is 5 mass% or more, 10 mass% or more, 20 mass% or more, 30 mass% or more, 40 mass% or more, 50 mass% or more, 60 mass% or more, 70 mass% or more, 80 mass% or more, 90 mass% or more, or 95 mass% or more. In another embodiment, when the (a2) polystyrene-based resin is a copolymer of a styrene-based compound and another monomer, the amount of the constituent unit derived from the styrene-based compound in the copolymer is 95 mass% or less, 90 mass% or less, 80 mass% or less, 70 mass% or less, 60 mass% or less, 50 mass% or less, 40 mass% or less, 30 mass% or less, 20 mass% or less, 10 mass% or less, or 5 mass% or less.

Examples of the styrene-based compound include styrene, α-methylstyrene, 2,4-dimethylstyrene, monochlorostyrene, p-methylstyrene, *p-tert-*butylstyrene, and ethylstyrene, for example. Styrene is preferred from the viewpoint of practicality of the raw material.

In addition, examples of monomers other than styrene-based compounds include methacrylic acid esters such as methyl methacrylate and ethyl methacrylate; acid anhydrides such as maleic anhydride; and α-olefins such as ethylene, for example.

Examples of the (a2) polystyrene-based resin include atactic polystyrene and rubber-reinforced polystyrenes, for example. Examples of rubber-reinforced polystyrenes include high-impact polystyrene, for example. At least one selected from the group consisting of atactic polystyrene and high impact polystyrene is preferred as the (a2) polystyrene-based resin.

The content of the (a2) polystyrene-based resin may be adjusted as appropriate. For example, from the viewpoint of achieving a sufficiently good balance among processability, heat resistance, tracking resistance performance, and rigidity, the content of the (a2) polystyrene-based resin is 1 to 49 parts by mass, preferably 5 to 49 parts by mass, and more preferably 10 to 49 parts by mass, in 100 parts by mass of the (a) resin component. In one embodiment, the content of the (a2) polystyrene-based resin is 1 part by mass or more, 5 parts by mass or more, 10 parts by mass or more, 20 parts by mass or more, 30 parts by mass or more, 40 parts by mass or more, or 45 parts by mass or more, relative to 100 parts by mass of the (a) resin component. In another embodiment, the content of the (a2) polystyrene-based resin is 49 parts by mass or less, 45 parts by mass or less, 40 parts by mass or less, 30 parts by mass or less, 20 parts by mass or less, 10 parts by mass or less, or 5 parts by mass or less, relative to 100 parts by mass of the (a) resin component.

### [(a3) Hydrogenated block copolymer]

As the (a) resin component, (a3) a hydrogenated block copolymer may be used. The (a3) hydrogenated block copolymer is a hydrogenated block copolymer obtained through hydrogenation of a block copolymer of an aromatic vinyl compound and a conjugated diene compound. Examples of the block copolymer of an aromatic vinyl compound and a conjugated diene compound include block copolymers of styrene and a conjugated diene compound, i.e., block copolymers consisting of a polystyrene block and a conjugated diene compound polymer block, for example.

The hydrogenation rate of conjugated diene compound-derived unsaturated bonds resulting through the hydrogenation is preferably 60% or more, more preferably 80% or more, and even more preferably 95% or more from a viewpoint of thermal stability.

In a case in which the block copolymer prior to hydrogenation is a block copolymer of styrene and a conjugated diene compound, the structure of this block copolymer may be S-B-S, S-B-S-B, (S-B-)₄-Si, S-B-S-B-S, or the like, for example, where S represents a styrene block chain, B represents a diene compound block chain, and Si represents a silicon atom.

The microstructure of the diene compound polymer block can be arbitrarily selected.

The vinyl bond content (total of 1,2-vinyl bonds and 3,4-vinyl bonds) in the conjugated diene compound polymer block is preferably within a range of 2% to 60%, and more preferably within a range of 8% to 40% relative to the total bond content (total of 1,2-vinyl bonds, 3,4-vinyl bonds, and 1,4-conjugated bonds) in the diene compound polymer.

The number-average molecular weight of the (a3) hydrogenated block copolymer may be adjusted as appropriate, and is preferably 100,000 to 400,000, more preferably 150,000 to 350,000, and even more preferably 200,000 to 300,000. When the number-average molecular weight is 100,000 or more, a resin composition excellent in impact resistance can be obtained. The impact resistance of the resin composition of the present embodiment improves in proportion to the number-average molecular weight of (a3) the hydrogenated block copolymer. In addition, when the number-average molecular weight of the (a3) hydrogenated block copolymer is 400,000 or less, a polyphenylene ether resin composition with low load during melt extrusion and excellent processing flowability can be obtained, and the dispersibility of the (a3) hydrogenated block copolymer into the polyphenylene ether resin composition is improved.

When the (a3) hydrogenated block copolymer has styrene polymer block chains in the (a3) hydrogenated block copolymer, at least one styrene polymer block chain has a number-average molecular weight of preferably 15,000 or more, more preferably 20,000 or more and 50,000 or less. It is even more preferable that all styrene polymer block chains have a number-average molecular weight of 15,000 or more.

In a case in which the (a3) hydrogenated block copolymer includes the styrene polymer block chains, no specific limitations are placed on the proportion constituted by styrene polymer block chains in the (a3) hydrogenated block copolymer as long as the number-average molecular weight of at least one styrene polymer block chain is 15,000 or more. From a viewpoint of impact resistance, the proportion is preferably 10 mass% to 70 mass%, more preferably 20 mass% to 50 mass%, and even more preferably 30 mass% to 40 mass%.

Two or more types of hydrogenated block copolymers with different chemical composition or structure can be used together as the (a3) hydrogenated block copolymer. Examples include combined use of a hydrogenated block copolymer having a bound styrene polymer block content of 50 mass% or more and a hydrogenated block copolymer having a bound styrene polymer block content of 30 mass% or less, combined use of hydrogenated block copolymers having different molecular weights, and combined use of a block copolymer of styrene and a conjugated diene such as those described above and a hydrogenated random block copolymer obtained through hydrogenation of a block copolymer that includes a random copolymer block of styrene and a conjugated diene.

As used therein, the "bound styrene polymer block content" refers to the proportion constituted by a styrene polymer block chain in the (a3) hydrogenated block copolymer.

The (a3) hydrogenated block copolymer preferably has a content of Li (lithium) as a residual metal component of 100 mass ppm or less. When the Li content is 100 mass ppm or less, the resin composition of the present embodiment has excellent long-term thermal aging resistance or flame retardance after thermal aging. From the same viewpoint, the Li content of the (a3) hydrogenated block copolymer is more preferably 50 mass ppm or less, and even more preferably 20 mass ppm or less.

The Li content is measured by dry ashing, i.e., weighing the sample, placing it in a crucible, and pretreating it by heating at 500 to 600 °C for 5 to 20 minutes using a burner or electric furnace, followed by application of the ICP-AES method using the iCAP6300 Duo manufactured by Thermo Fisher Scientific, Inc.

The (a3) hydrogenated block copolymer may be dispersed in particulate form into the polyphenylene ether resin composition. In cases where the (a3) hydrogenated block copolymer is dispersed in particulate form, the average particle size is preferably from 0.1 to 3.0 µm, more preferably from 0.2 to 2.0 µm, and more preferably from 0.3 to 1.0 µm. When the average particle size is 0.1 µm to 3.0 µm, the resin composition of the present embodiment has excellent impact resistance.

The average particle size of hydrogenated block copolymer (a3) refers to the weight average particle size.

The content of the (a3) hydrogenated block copolymer may be adjusted as appropriate. For example, the content ranges from 1 to 49 parts by mass, preferably from 1 to 35 parts by mass, and more preferably from 1 to 25 parts by mass in 100 parts by mass of the (a) resin component. When the content of the (a3) hydrogenated block copolymer is 1 part by mass or more, excellent impact strength is obtained in the resin composition of the present embodiment. On the other hand, when the content of the (a3) hydrogenated block copolymer is 49 parts by mass or less, it is possible to obtain the resin composition having excellent compatibility with the (a3) polyphenylene ether, high impact resistance, and excellent rigidity such as bending modulus and bending strength.

### [(b) Titanium oxide]

There is no particular limitation on the (b) titanium oxide used in the resin composition of the present embodiment, and any well-known titanium oxide may be used.

The average primary particle size of the (b) titanium oxide is preferably 0.01 to 0.5 µm, more preferably 0.05 to 0.4 µm, and even more preferably 0.15 to 0.3 µm in view of balance among dispersibility, white coloring ability, and handleability during production.

The (b) titanium oxide may contain, as a surface treatment agent, at least one of oxides of metals such as aluminum, magnesium, zirconia titanium, and tin, hydrated oxides of these metals, salts of higher fatty acid, e.g., stearic acid, of these metals, or organic silicon compounds.

The (b) titanium oxide can be produced by the dry or wet method.

The crystal structure of the (b) titanium oxide may be either rutile or anatase type, and the rutile type is preferred from the viewpoint of white coloring ability and thermal stability of the thermoplastic resin composition used in the present embodiment.

One type of (b) titanium oxide may be used alone or two or more types may be used in a combination.

The content of the (b) titanium oxide is 5 to 40 parts by mass, preferably 10 to 40 parts by mass, and more preferably 15 to 40 parts by mass relative to 100 parts by mass of the (a) resin component to the extent that a mass ratio of (b) to (c) to be described below of 0.2 to 8.0 is satisfied. When the content of the (b) titanium oxide is 5 to 40 parts by mass, a sufficiently good balance between workability and tracking resistance performance can be achieved. In one embodiment, the content of the (b) component is 5 parts by mass or more, 10 parts by mass or more, 15 parts by mass or more, 20 parts by mass or more, 25 parts by mass or more, 30 parts by mass or more, or 35 parts by mass or more relative to 100 parts by mass of the (a) component. In another embodiment, the content of the (b) component is 40 parts by mass or less, 35 parts by mass or less, 30 parts by mass or less, 25 parts by mass or less, 20 parts by mass or less, 15 parts by mass or less or 10 parts by mass or less relative to 100 parts by mass of the (a) component.

### [(c) Inorganic filler]

The resin composition of the present embodiment contains (c) an inorganic filler having a thermal conductivity of 2 to 12 [W/(m·K)]. Inorganic fillers having a thermal conductivity in this range are considered to have higher thermal conductivity and better heat dissipation ability in the resin as compared to, for example, glass fiber that is a common inorganic filler. It is therefore considered that carbonized conductive paths are less likely to be formed, and the reduction in tracking resistance performance that may occur when the inorganic filler is added is small.

The (c) component is not particularly limited to as long as it is an inorganic filler having a thermal conductivity of 2 to 12 [W/(m·K)], and (c-1) a calcium silicate-based fibrous material and (c-2) talc may be exemplified.

### [(c-1) Calcium silicate-based fibrous material]

The (c-1) calcium silicate-based fibrous material has the effect of maintaining tracking resistance performance and the effect of improving physical properties. As the (c-1) calcium silicate-based fibrous materials, well-known materials composed mainly of CaO and SiO₂ can be used, among which wollastonite and zonotolite are preferred, for example. Wollastonite is more preferred.

Wollastonite has a composition represented by the formula CaO·SiO₂. Wollastonite is available in natural and synthetic products. Natural products usually exist as aggregates of fibers, and they are used after being subjected to pulverization and classification. The aspect ratio (ratio of fiber length / fiber diameter) of wollastonite depends on the pulverization method and the geographical region of the natural source. Synthetic products having a high degree of uniformity are available.

Zonotolite has a composition represented by the formula 6CaO·6SiO₂·H₂O. Zonotolite is available in natural and synthetic products.

### [(c-2) Talc]

Talc is a mineral that contains magnesium hydroxide and silicate, and has the chemical name of hydrated magnesium silicate. In general, talc is composed of about 60% of SiO₂, 30% of MgO, and 4.8% of crystalline water as primarily component.

Talc may be treated with a surface treatment agent from the viewpoint of improving affinity with the resin. Examples of the surface treatment agent include, but are not particularly limited to, silane coupling agents such as amino silanes and epoxy silanes; titanate-based coupling agents; fatty acids (saturated fatty acids and unsaturated fatty acids); alicyclic carboxylic acids; resin acids; and metal soaps, for example. The amount of the surface treatment agent added is not particularly limited and is preferably 3 mass% or less, 2 mass% or less relative to 100 mass% of talc, and substantially being free of surface treatment agent is most preferred.

In one embodiment, the thermal conductivity of the (c) inorganic filler is 2.0 [W/(m·K)] or more, 2.5 [W/(m·K)] or more, 3.0 [W/(m·K)] or more, 3.5 [W/(m·K)] or more, 4.0 [W/(m·K)] or more, 4.5 [W/(m·K)] or more, 5.0 [W/(m·K)] or more, 5.5 [W/(m·K)] or more, 6.0 [W/(m·K)] or more, 6.5 [W/(m·K)] or more, 7.0 [W/(m·K)] or more, 7.5 [W/(m·K)] or more, 8.0 [W/(m·K)] or more, 8.5 [W/(m·K)] or more, 9.0 [W/(m·K)] or more, 9.5 [W/(m·K)] or more, 10.0 [W/(m·K)] or more, 10.5 [W/(m·K)] or more, 11.0 [W/(m·K)] or more, or 11.5 [W/(m·K)] or more. In addition, in another embodiment, the thermal conductivity of the (c) inorganic filler is 12.0 [W/(m·K)] or less, 11.5 [W/(m·K)] or less, 11.0 [W/(m·K)] or less, 10.5 [W/(m·K)] or less, 10.0 [W/(m·K)] or less, 9.5 [W/(m·K)] or less, 9.0 [W/(m·K)] or less, 8.5 [W/(m·K)] or less, 8.0 [W/(m·K)] or less, 7.5 [W/(m·K)] or less, 7.0 [W/(m·K)] or less, 6.5 [W/(m·K)] or less, 6.0 [W/(m·K)] or less, 5.5 [W/(m·K)] or less, 5.0 [W/(m·K)] or less, 4.5 [W/(m·K)] or less, 4.0 [W/(m·K)] or less, 3.5 [W/(m·K)] or less, 3.0 [W/(m·K)] or less, or 2.5 [W/(m·K)] or less.

One type of the (c) inorganic filler may be used alone or two or more types may be used in a combination.

In addition to the (c) inorganic filler, the resin composition of the present embodiment may or may not contain an inorganic filler having a thermal conductivity of less than 2 [W/(m·K)] or more than 12 [W/(m·K)] (referred to as "another inorganic filler"). In cases where another inorganic filler is included, the amount of the other inorganic filler may be set such that the average thermal conductivity of the (c) inorganic filler and the other inorganic filler is 2 to 12 [W/(m·K)], for example.

The content of the (c) inorganic filler in the resin composition of the present embodiment is 5 to 50 parts by mass, preferably 5 to 45 parts by mass, more preferably 10 to 40 parts by mass relative to 100 parts by mass of the (a) resin component, from the viewpoint of achieving a sufficiently good balance among processability, heat resistance, tracking resistance performance, and rigidity. In one embodiment, the content of the (c) component is 5 parts by mass or more, 10 parts by mass or more, 15 parts by mass or more, 20 parts by mass or more, 25 parts by mass or more, 30 parts by mass or more, 35 parts by mass or more, 40 parts by mass or more or 45 parts by mass or more relative to 100 parts by mass of the (a) component. In another embodiment, the content of the (c) component is 50 parts by mass or less, 45 parts by mass or less, 40 parts by mass or less, 35 parts by mass or less, 30 parts by mass or less, 25 parts by mass or less, 20 parts by mass or less, 15 parts by mass or less, or 10 parts by mass or less relative to 100 parts by mass of (a) component.

### [Mass ratio of (b) component to (c) component]

In the present embodiment, the mass ratio ((b) / (c)) of the (b) component to the (c) component is 0.2 to 8.0. It is considered that this mass ratio helps trap the electric charge in the potential well generated by the (b) component dispersed in the resin when voltage is applied, thereby stabilizing the space charge, which results in improvement in tracking resistance. A ratio of 0.2 to 8.0 with the (c) component is considered to help balance between tracking resistance performance and rigidity at a high degree. The possible reason for this is that the reduction in tracking resistance caused by the carbonized conductive paths formed from the (c) component is moderately suppressed, while the effect of enhancing the rigidity by the (c) component is exhibited.

In one embodiment, the mass ratio ((b) / (c)) is 0.20 or more, 0.50 or more, 0.60 or more, 0.65 or more, 0.70 or more, 0.80 or more, 0.90 or more, 1.00 or more, 1.10 or more, 1.20 or more, 1.30 or more, 1.40 or more, 1.50 or more, 1.60 or more, 1.70 or more, 1.80 or more, 1.90 or more, 2.00 or more, 2.50 or more, 3.00 or more, 3.30 or more, 3.50 or more, 4.00 or more, 4.50 or more, 5.00 or more, 5.50 or more, 6.00 or more, 6.50 or more, 7.00 or more, or 7.50 or more. In another embodiment, the mass ratio ((b) / (c)) is 8.00 or less, 7.50 or less, 7.00 or less, 6.50 or less, 6.00 or less, 5.50 or less, 5.00 or less, 4.50 or less, 4.00 or less, 3.50 or less, 3.00 or less, 2.50 or less, 2.00 or less, 1.90 or less, 1.80 or less, 1.70 or less, 1.60 or less, 1.50 or less, 1.40 or less, 1.30 or less, 1.20 or less, 1.10 or less, 1.00 or less, 0.65 or less, or 0.50 or less. The mass ratio ((b) / (c)) is preferably 0.5 to 5.0, more preferably 0.6 to 4.0, and particularly preferably 0.65 to 3.5.

From the viewpoint of achieving a good balance between tracking resistance and rigidity, the total content of the (b) component and the (c) component is preferably 15 to 90 parts by mass, more preferably 20 to 80 parts by mass, and particularly preferably 20 to 75 parts by mass relative to 100 parts by mass of the (a) resin component.

### [(d) Posphate ester-based flame retardant]

The resin composition of the present embodiment may contain (d) a phosphate ester-based flame retardant. When the (d) phosphate ester-based flame retardant is included, the combination of the flame retardant aiding effect of the (a1) polyphenylene ether and the flame retardant imparting effect of the (d) phosphate ester-based flame retardant has a significant synergetic effect to impart flame retardancy to the resin composition of the present embodiment.

Known phosphate ester-based flame retardants can be used as the (d) phosphate ester-based flame retardant. Examples of the (d) phosphate ester-based flame retardant include, for example, phosphate esters represented by the following general formula (1) and their condensation products: 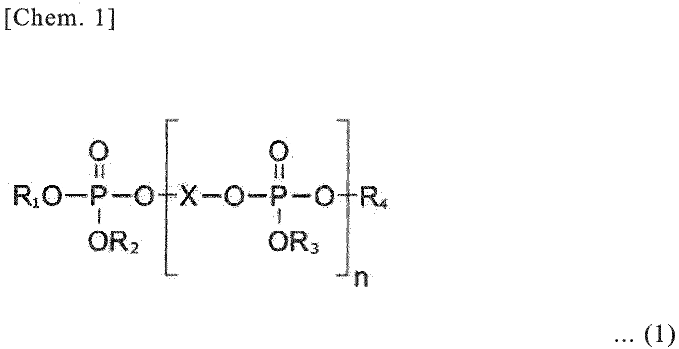 In formula (1), R₁, R₂, R₃, and R₄ are each independently one selected from the group consisting of a hydrogen atom, a halogen atom, an alkyl group, a cycloalkyl group, an aryl-substituted alkyl group, an aryl group, a halogen-substituted aryl group, and an alkyl-substituted aryl group, and may be either identical to or different from each other. X represents an arylene group. n is an integer of 0, 1, 2, 3, 4 or 5. Note that, in a case in which n = 0, the compound of formula (1) represents a phosphate ester monomer. In a case in which n = 1 to 5, the compound of formula (1) represents a condensation product of a phosphate ester monomer.

Representative examples of phosphate ester monomers include triphenyl phosphate, tricresyl phosphate, and trixylenyl phosphate.

In cases of a condensation product of a phosphate ester monomer, n may usually be 1, 2, 3, 4 or 5 on average, and is preferably 1, 2 or 3 on average.

From the viewpoint of flame retardancy and heat resistance exhibited when mixed with a different resin, it is preferable that at least one of R₁, R₂, R₃ and R₄ in formula (1) is an aryl group, and it is more preferable that all of R₁, R₂, R₃ and R₄ are aryl groups. Examples of aryl groups include, for example, phenyl, xylenyl, kresyl, or halogenated derivatives thereof.

Preferred examples of by X may, for example, be a residue group resulting from elimination of two hydroxy groups from resorcinol, hydroquinone, bisphenol A, biphenol, or a halogenated derivative thereof.

Examples of condensed-type phosphate ester compounds include resorcinol-bisphenyl phosphate compounds, bisphenol A-polyphenyl phosphate compounds, and bisphenol A-polycresyl phosphate compounds.

One type of the (d) phosphate ester-based flame retardant may be used alone or two or more types may be used in a combination.

The content of the (d) phosphate ester-based flame retardant may be adjusted as appropriate. For example, the content is 5 to 30 parts by mass, preferably 5 to 25 parts by mass, and more preferably 5 to 20 parts by mass relative to 100 parts by mass of the (a) resin component, in view of balance among flowability, heat resistance, and flame resistance.

### [Other components]

In addition to the (a1), (b), and (c) components, which are essential components, and the (a2), (a3), and (d) components, which are optional components, the resin composition of the present embodiment may contain other components as necessary to the extent that the tracking resistance performance and rigidity of the polyphenylene ether resin composition are not compromised.

Examples of other components include, for example, thermoplastic elastomers (polyolefin-based elastomers), heat stabilizers, antioxidants, metal deactivators, crystal nucleating agents, flame retardants other than the (d) phosphate ester-based flame retardants (e.g., ammonium polyphosphate-based compounds and silicone flame retardants), plasticizers (e.g., low molecular weight polyethylene, epoxidized soybean oil, polyethylene glycol, and fatty acid esters), weather resistance modifiers, light resistance modifiers, slip agents, organic fillers, organic reinforcement materials (e.g., polyacrylonitrile fibers and aramid fibers), colorants, and mold release agents.

One types of other components may be used alone or two or more types may be used in a combination.

### [Production method of resin composition]

The resin composition of the present embodiment can be produced by melt-kneading the essential components and optional components. For example, the apparatus and conditions described in JP 2018-062608 A can be employed.

A specific method of producing the resin composition of the present embodiment preferably involves using an extruder in which the oxygen concentration of each raw material feeding inlet is controlled to less than 1.0 volume%, and carrying out one of the following methods 1 to 2.
1. A production method involving melt-kneading all or part of the (a) component and the (b) component to be contained in the resin composition of the present embodiment (first kneading step), and feeding the remaining components of the resin composition to the kneaded product in the molten state obtained in the first kneading step, followed by melt-kneading (second kneading step).
2. A production method involving melt-kneading all of the (a) component to the (d) component to be contained in the resin composition of the present embodiment.

In the first kneading step through the second kneading step in 1 above, the aforementioned kneaded material may be molten to avoid the operation of melting and pelletizing the (a1) component and melting it again.

### [Molded article]

A molded article of the present embodiment contains the polyphenylene ether resin composition of the present embodiment. There are no limitations on the shape of the molded article of the present embodiment, and it may have a film, sheet, or box shape, for example.

The method of producing the molded article of the present embodiment is not particularly limited, and any known production method of molded articles by using resin compositions can be used. The method of producing the molded article of the present embodiment may include, for example, injection molding (e.g., insert molding, hollow molding, and multicolor molding), blow molding, compression molding, extrusion molding, thermal molding, and cutting from thick plates. Among these, injection molding is preferred in view of mass production.

In one embodiment, the molded article of the present embodiment is one or more selected from the group consisting of an injection molded article, a blow molded article, a compression molded article, an extruded article, thermally molded article, and an article cut out from a thick plate, of the polyphenylene ether resin composition of the present embodiment. In another embodiment, the molded article of the present embodiment is one or more selected from the group consisting of an insert molded article, a hollow molded article, and a multicolor molded article of the polyphenylene ether resin composition of the present embodiment.

The bending modulus is an index indicative of the rigidity of a molded article. The bending modulus of the molded article is not particularly limited and is, for example, 2000 MPa or more, 2500 MPa or more, 3000 MPa or more, 3500 MPa or more, 4000 MPa or more, 4500 MPa or more, 5000 MPa or more, 5500 MPa or more, 6000 MPa or more, or 6500 MPa or more. The bending modulus of the molded article is, for example, 8000 MPa or less, 7500 MPa or less, 7000 MPa or less, 6500 MPa or less, 6000 MPa or less, 5500 MPa or less, 5000 MPa or less, 4500 MPa or less, 4000 MPa or less, 3500 MPa or less, 3000 MPa or less, or 2500 MPa or less. In particular, when the bending modulus is 3000 MPa or more, the molded article has a sufficient rigidity for applications of mechanical components or structures.

### [Application]

The application of the resin composition of the present embodiment is not particularly limited. The resin compositions of the present embodiment can be used in applications where tracking resistance performance and rigidity are important, and can be suitably used in electrical components, electronic components, and automotive electrical and electronic components.

Applications for electrical components include, for example, office machines, measurement instruments, chassis, electrical devices, power adapters, recording media, drives of recording media, sensor devices, terminal blocks, secondary batteries, fuel cells, solar cells, generators, smart meters, power transmission facilities, cable terminals, automobiles, connection structures for solar power modules (module connectors, junction boxes, etc.), hybrid vehicles, and electric vehicles.

### EXAMPLES

The following describes the present embodiment through specific examples and comparative examples. However, the present embodiment is not limited to these examples.

### Measurement methods

Measurement methods used in the examples and comparative examples were as follows.

### Rigidity (bending modulus)

Produced resin composition pellets were fed into a small-size injection molding machine (product name: EC75SXII manufactured by Toshiba Machine Co., Ltd.), of which the cylinder temperature was set to 280 °C, and were molded under conditions of a mold temperature of 80 °C, an injection pressure of 120 MPa, an injection time of 15 seconds, and a cooling time of 20 seconds to prepare an ISO dumbbell for evaluation. The bending modulus (MPa) of this ISO dumbbell was measured according to ISO 178 to thereby evaluate the rigidity. A greater value of the bending modulus was determined to signify better rigidity.

### Tracking resistance performance (CTI)

Produced resin composition pellets were fed into the small-sized injection molding machine (product name: EC75SXII manufactured by Toshiba Machine Co., Ltd.), of which the cylinder temperature was set to 280 °C, and were molded under conditions of a mold temperature of 80 °C and an injection pressure of 120 MPa to obtain a flat plate of 70 mm × 70 mm × 3 mm. The maximum voltage (V) at which tracking breakdown of the flat plate did not occur was measured according to IEC60112:2003 (electrolyte used: solution A, and number of drops: 50 drops) to thereby evaluate the tracking resistance. A greater value of the maximum voltage was determined to signify better tracking resistance.

Raw materials used in the examples and comparative examples were as follows.

### (a1) Polyphenylene ether

- Poly(2,6-dimethyl-1,4-phenyleneether), "product name: S201A manufactured by Asahi Kasei Corporation", reduced viscosity (as measured in a 0.5 g/dL chloroform solution at 30 °C, measured using an Ubbelohde-type viscometer): 0.5 dL/g

### (a2) Polystyrene-based resin

- Polystyrene, "product name: Polystyrene 685 manufactured by PSJ"
   It is polystyrene free of a rubber component, i.e., it is not rubber-reinforced polystyrene.
- High-impact polystyrene, "product name: CT60 manufactured by Petrochemicals"

### (a3) Hydrogenated block copolymer

- SEBS, "product name: TAIPOL6151, manufactured by TSRC Corporation"

### (b) Titanium oxide

- Titanium oxide, "product name: TIOXIDE R-TC30 manufactured by Huntsman Corporation", average particle size (average primary particle size): 0.21 µm, crystal structure: rutile type

### (c) Inorganic filler

(c-1) Calcium silicate-based fibrous material: wollastonite, "product name: KTP-H02S manufactured by Kansai Matech Co., Ltd.", thermal conductivity: 2.7 [W/(m·K)]
(c-2) Talc, "product name: CROWN TALC PK-MMB manufactured by Matsumura Sangyo Co., Ltd.", thermal conductivity: 5.2 to 10.7 [W/(m·K)]

### Comparative inorganic filler

(c'-1) Glass fiber, "product name: ECS03T-249, manufactured by Nippon Electric Glass Co., Ltd.", thermal conductivity: 1.0 [W/(m·K)].
(c'-2) Mica, "product name: C-100IF, Repco, Inc.", thermal conductivity: 0.67 [W/(m.K)]
(c'-3) Fibrous basic magnesium sulfate, "product name: MOS HIGE manufactured by Ube Materials, Ltd.", thermal conductivity: 0.1 [W/(m·K)].

### (d) Phosphate ester-based flame retardant

- Aromatic condensed phosphate ester, "product name: CR-741 manufactured by Daihachi Chemical Industry Co., Ltd."

### Example 1

A twin-screw extruder (ZSK-25, manufactured by Coperion) was used. The twin screw extruder included a first raw material feeding inlet at an upstream side relative to the direction of raw material flow, a first vacuum vent, a second raw material feeding inlet, and a third raw material feeding inlet downstream to the first raw material feeding inlet, and a second vacuum vent further downstream t. The cylinder temperature was set to 320 °C on the upstream side and 300 °C on the downstream side. According to the blending ratio (parts by mass) summarized in Table 1, the (a) component was fed from the first feeding inlet, the (b) component was fed from the second feeding inlet, and the (c) component was fed from the third feeding inlet. The (d) phosphate ester-based flame retardant that was liquid was fed through a downstream pressurized nozzle and melt-kneaded.

At this process, the screw speed was set to 200 revolutions/minute and the discharge rate was set to 15 kg/h. In addition, residual volatilization components were removed by depressurized aspiration through an opening (vent) provided at the cylinder block. The degree of depressurization (pressure) at this depressurized aspiration was 0.09 MPa.

Strands extruded from the die were cooled and continuously cut by a cutter to obtain pellets of the resin composition of Example 1 sized to approximately 3 mm in length × 3 mm in diameter.

### Examples 2 to 13 and Comparative Examples 1 to 6

Resin pellets were obtained in an operation similar to Example 1, except that the formulations were changed as listed in Tables 1 to 3.

The obtained resin composition pellets were used to evaluate the rigidity and the tracking resistance performance. The evaluation results are summarized in Table 1.

**[Table 1]**

| Component | | Unit | Example 1 | Comp. Ex. 1 |
|---|---|---|---|---|
| (a1) | Polyphenylene ether | parts by mass | 67 | 67 |
| (b) | Titanium oxide | | 20 | 20 |
| (c-1) | Calcium silicate-based fibrous material | | 24 | 0 |
| (c-2) | Talc | | 0 | 0 |
| (c'-1) | Glass fiber | | 0 | 24 |
| (a2) | Polystyrene-based resin | | 30 | 30 |
| (a3) | Hydrogenated block copolymer | | 3 | 3 |
| (d) | Condensation product of phosphate ester | | 0 | 0 |
| Total | | parts by mass | 144 | 144 |
| (b) / (c) | | | 0.83 | 0.83 |
| Physical properties | Bending modulus | MPa | 5190 | 6390 |
| | Tracking resistance | V | 350 | 250 |

**[Table 2]**

| Ingredients | | Unit | Example 2 | Example 3 | Comp. Ex. 2 | Comp. Ex. 3 | Example 4 | Example 5 | Comp. Ex. 4 | Comp. Ex. 5 | Comp. Ex. 6 |
|---|---|---|---|---|---|---|---|---|---|---|---|
| (a1) | Polyphenylene ether | parts by mass | 50 | 80 | 67 | 67 | 67 | 67 | 67 | 67 | 67 |
| (b) | Titanium oxide | | 24 | 24 | 0 | 20 | 20 | 20 | 20 | 20 | 20 |
| (c-1) | Calcium silicate-based fibrous material | | 24 | 24 | 0 | 0 | 24 | 0 | 0 | 0 | 0 |
| (c-2) | Talc | | 0 | 0 | 0 | 0 | 0 | 24 | 0 | 0 | 0 |
| (c'-1) | Glass fiber | | 0 | 0 | 0 | 0 | 0 | 0 | 24 | 0 | 0 |
| (c'-2) | Mica | | 0 | 0 | 0 | 0 | 0 | 0 | 0 | 24 | 0 |
| (c'-3) | Fibrous basic magnesium sulfate | | 0 | 0 | 0 | 0 | 0 | 0 | 0 | 0 | 24 |
| (a2) | Polystyrene-based resin | | 47 | 17 | 30 | 30 | 30 | 30 | 30 | 30 | 30 |
| (a3) | Hydrogenated block copolymer | | 3 | 3 | 3 | 3 | 3 | 3 | 3 | 3 | 3 |
| (d) | Condensation product of phosphate ester | | 11 | 11 | 11 | 11 | 11 | 11 | 11 | 11 | 11 |
| Total | | parts by mass | 159 | 159 | 111 | 131 | 155 | 155 | 155 | 155 | 155 |
| (b) / (c) | | | 1.00 | 1.00 | - | - | 0.83 | 0.83 | 0.83 | 0.83 | 0.83 |
| Physical properties | Bending modulus | MPa | 5280 | 5140 | 2580 | 2890 | 5130 | 4090 | 6330 | 5570 | 6640 |
| | Tracking resistance | V | 425 | 400 | 275 | 525 | 400 | 400 | 300 | 350 | 300 |

**[Table 3]**

| Ingredients | | Unit | Example 6 | Example 7 | Example 8 | Example 9 | Example 10 | Example 11 | Example 12 | Example 13 |
|---|---|---|---|---|---|---|---|---|---|---|
| (a1) | Polyphenylene ether | parts by mass | 67 | 67 | 67 | 67 | 67 | 67 | 67 | 67 |
| (b) | Titanium oxide | | 27 | 24 | 22 | 33 | 40 | 20 | 32 | 29 |
| (c-1) | Calcium silicate-based fibrous material | | 40 | 24 | 12 | 17 | 12 | 24 | 27 | 17 |
| (a2) | Polystyrene-based resin | | 30 | 30 | 30 | 30 | 30 | 14 | 14 | 14 |
| (a3) | Hydrogenated block copolymer | | 3 | 3 | 3 | 3 | 3 | 19 | 19 | 19 |
| (d) | Condensation product of phosphate ester | | 11 | 11 | 11 | 11 | 11 | 17 | 17 | 11 |
| Total | | parts by mass | 178 | 159 | 145 | 161 | 163 | 161 | 176 | 157 |
| (b) / (c) | | | 0.68 | 1.00 | 1.83 | 1.94 | 3.33 | 0.83 | 1.19 | 1.71 |
| Physical properties | Bending modulus | MPa | 6980 | 5010 | 3840 | 4710 | 4260 | 4280 | 4470 | 3730 |
| | Tracking resistance | V | 350 | 400 | 425 | 425 | 425 | 400 | 400 | 425 |

### INDUSTRIAL APPLICABILITY

According to the present disclosure, it is possible to provide a resin composition that is excellent in tracking resistance performance and that can be used to produce a molded article provided with rigidity.

## Claims

1. A polyphenylene ether resin composition comprising:
(a) a resin component;
(b) titanium oxide; and
(c) an inorganic filler,
wherein the (c) inorganic filler has a thermal conductivity of 2 to 12 [W/(m.K)],
the (a) resin component comprises 50 to 90 parts by mass of (a1) a polyphenylene ether in 100 parts by mass of the (a) resin component,
an amount of the (b) titanium oxide is 5 to 40 parts by mass relative to 100 parts by mass of the (a) resin component,
an amount of the (c) inorganic filler is 5 to 50 parts by mass relative to 100 parts by mass of the (a) resin component, and
a mass ratio of the (b) titanium oxide to the (c) inorganic filler ((b) / (c)) is 0.2 to 8.0.

2. The polyphenylene ether resin composition according to claim 1, wherein the (c) inorganic filler is one or more selected from the group consisting of (c-1) a calcium silicate-based fibrous material and (c-2) talc.

3. The polyphenylene ether resin composition according to claim 2, wherein the (c) inorganic filler is the (c-1) calcium silicate-based fibrous material.

4. The polyphenylene ether resin composition according to claim 2, wherein the (c-1) calcium silicate-based fibrous material is wollastonite.

5. The polyphenylene ether resin composition according to any one of claims 1 to 4, wherein a total content of the (b) titanium oxide and the (c) inorganic filler is 15 to 90 parts by mass relative to 100 parts by mass of the (a) resin component.

6. The polyphenylene ether resin composition according to any one of claims 1 to 5, wherein the (a) resin component contains 1 to 49 parts by mass of (a2) a polystyrene-based resin in 100 parts by mass of the (a) resin component.

7. The polyphenylene ether resin composition according to any one of claims 1 to 6, wherein the (a) resin component contains 1 to 49 parts by mass of (a3) a hydrogenated block copolymer in 100 parts by mass of the (a) resin component.

8. The polyphenylene ether resin composition according to any one of claims 1 to 7, comprising 5 to 30 parts by mass of (d) a phosphate ester-based flame retardant relative to 100 parts by mass of the (a) resin component.

9. The polyphenylene ether resin composition according to claim 8, wherein the (d) phosphate ester-based flame retardant is a condensation product of a phosphate ester.

10. A molded article comprising the polyphenylene ether resin composition according to any one of claims 1 to 9.

## Patentansprüche

1. Polyphenylenetherharz-Zusammensetzung, umfassend:
(a) eine Harzkomponente;
(b) Titanoxid; und
(c) einen anorganischen Füllstoff,
wobei der anorganische Füllstoff (c) eine Wärmeleitfähigkeit von 2 bis 12 [W/(m·K)] aufweist,
die Harzkomponente (a) 50 bis 90 Massenteile (a1) eines Polyphenylenethers in 100 Massenteilen der Harzkomponente (a) umfasst,
die Menge des Titanoxids (b) 5 bis 40 Massenteile, bezogen auf 100 Massenteile der Harzkomponente (a), beträgt,
die Menge des anorganischen Füllstoffs (c) von 5 bis 50 Massenteile, bezogen auf 100 Massenteile der Harzkomponente (a), beträgt, und
das Massenverhältnis des Titanoxids (b) zu dem anorganischen Füllstoff (c), also ((b) / (c)), von 0,2 bis 8,0 ist.

2. Polyphenylenetherharz-Zusammensetzung nach Anspruch 1, wobei der anorganische Füllstoff (c) einer oder mehrere ist/sind, ausgewählt aus der Gruppe bestehend aus (c-1) einem Fasermaterial auf Calciumsilicatbasis und (c-2) Talk.

3. Polyphenylenetherharz-Zusammensetzung nach Anspruch 2, wobei der anorganische Füllstoff (c) das Fasermaterial auf Calciumsilicatbasis (c-1) ist.

4. Polyphenylenetherharz-Zusammensetzung nach Anspruch 2, wobei das Fasermaterial auf Calciumsilicatbasis (c-1) Wollastonit ist.

5. Polyphenylenetherharz-Zusammensetzung nach einem der Ansprüche 1 bis 4, wobei der Gesamtgehalt des Titanoxids (b) und des anorganischen Füllstoffs (c) 15 bis 90 Massenteile, bezogen auf 100 Massenteile der Harzkomponente (a), beträgt.

6. Polyphenylenetherharz-Zusammensetzung nach einem der Ansprüche 1 bis 5, wobei die Harzkomponente (a) 1 bis 49 Massenteile eines Harzes auf Polystyrolbasis (a2) in 100 Massenteilen der Harzkomponente (a) enthält.

7. Polyphenylenetherharz-Zusammensetzung nach einem der Ansprüche 1 bis 6, wobei die Harzkomponente (a) 1 bis 49 Massenteile eines hydrierten Blockcopolymers (a3) in 100 Massenteilen der Harzkomponente (a) enthält.

8. Polyphenylenetherharz-Zusammensetzung nach einem der Ansprüche 1 bis 7, umfassend 5 bis 30 Massenteile (d) eines Flammschutzmittels auf Phosphatesterbasis, bezogen auf 100 Massenteile der Harzkomponente (a).

9. Polyphenylenetherharz-Zusammensetzung nach Anspruch 8, wobei das Flammschutzmittel auf Phosphatesterbasis (d) ein Kondensationsprodukt eines Phosphatesters ist.

10. Formgegenstand, der die Polyphenylenetherharz-Zusammensetzung nach einem der Ansprüche 1 bis 9 enthält.

## Revendications

1. Composition de résine de poly(éther de phénylène) comprenant :
(a) un composant de résine ;
(b) de l'oxyde de titane ; et
(c) une charge inorganique,
dans laquelle la charge inorganique (c) présente une conductivité thermique de 2 à 12 [W/(m•K)],
le composant de résine (a) comprend 50 à 90 parties en masse de (a1) un poly(éther de phénylène) dans 100 parties en masse du composant de résine (a),
une quantité de l'oxyde de titane (b) est de 5 à 40 parties en masse par rapport à 100 parties en masse du composant de résine (a),
une quantité de la charge inorganique (c) est de 5 à 50 parties en masse par rapport à 100 parties en masse du composant de résine (a), et
un rapport en masse de l'oxyde de titane (b) à la charge inorganique (c) ((b)/(c)) est de 0,2 à 8,0.

2. Composition de résine de poly(éther de phénylène) selon la revendication 1, dans laquelle la charge inorganique (c) est une ou plusieurs choisies dans le groupe constitué de (c-1) un matériau fibreux à base de silicate de calcium et de (c-2) talc.

3. Composition de résine de poly(éther de phénylène) selon la revendication 1, dans laquelle la charge inorganique (c) est le matériau fibreux à base de silicate de calcium(c-1).

4. Composition de résine de poly(éther de phénylène) selon la revendication 2, dans laquelle le matériau fibreux à base de silicate de calcium (c-1) est de la wollastonite.

5. Composition de résine de poly(éther de phénylène) selon l'une quelconque des revendications 1 à 4, dans laquelle une teneur totale de l'oxyde de titane (b) et de la charge inorganique (c) est de 15 à 90 parties en masse par rapport à 100 parties en masse du composant de résine (a).

6. Composition de résine de poly(éther de phénylène) selon l'une quelconque des revendications 1 à 5, dans laquelle le composant de résine (a) contient 1 à 49 parties en masse de (a2) une résine à base de polystyrène dans 100 parties en masse du composant de résine (a).

7. Composition de résine de poly(éther de phénylène) selon l'une quelconque des revendications 1 à 6, dans laquelle le composant de résine (a) contient 1 à 49 parties en masse de (a3) un copolymère séquencé hydrogéné dans 100 parties en masse du composant de résine (a).

8. Composition de résine de poly(éther de phénylène) selon l'une quelconque des revendications 1 à 7, comprenant 5 à 30 parties en masse de (d) un retardateur de flamme à base d'ester de phosphate par rapport à 100 parties en masse du composant de résine (a).

9. Composition de résine de poly(éther de phénylène) selon la revendication 8, dans laquelle le retardateur de flamme à base d'ester de phosphate (d) est un produit de condensation d'un ester de phosphate.

10. Article moulé comprenant la composition de résine de poly(éther de phénylène) selon l'une quelconque des revendications 1 à 9.
